Europäisches Patentamt

European Patent Office

Office européen des brevets

(11) Publication number: **0 483 924 A1**

## (12) EUROPEAN PATENT APPLICATION

(21) Application number: **91202786.9**

(22) Date of filing: **28.10.91**

(51) Int. Cl.5: **B60F 1/00**, B61D 3/18

(30) Priority: **01.11.90 NL 9002381**
**03.04.91 NL 9100577**

(43) Date of publication of application:
**06.05.92 Bulletin 92/19**

(84) Designated Contracting States:
**AT BE CH DE DK ES FR GB GR IT LI LU NL SE**

(71) Applicant: **STORK ALPHA ENGINEERING B.V.**
**Parallelweg 29**
**NL-1948 NK Beverwijk(NL)**

(72) Inventor: **Rittinghaus, Uwe**
**Waldeck Pyrmontdreef 14**
**NL-4101 KJ Culemborg(NL)**

(74) Representative: **Land, Addick Adrianus**
**Gosling et al**
**OCTROOIBUREAU ARNOLD & SIEDSMA**
**Sweelinckplein 1**
**NL-2517 GK Den Haag(NL)**

(54) **Universal trailer.**

(57) Trailer for coupling to an adapter which can be fixed to a bogie, which trailer is provided with coupling means for coupling to two or more different adapters.

FIG.2

EP 0 483 924 A1

Because of the increasing volume of traffic on motorways and the resulting impact on the environment, research has already been going on for a considerable time into incorporating trailers into so-called block trains.

Becoming more prevalent, particularly in the United States of America and Germany, is a system under the name Road Railer™, such as is described in the European patent application 264731. A first trailer is here supported and fixed onto a bogie, whereafter a second trailer is coupled directly to the first trailer. The pulling forces exerted on the train are therefore absorbed by the connection between the trailers. This involves the danger of breakage of the connection and/or large degree of wear thereof.

Further, other systems are already known for coupling trailers in a train, wherein an adapter is mounted on the bogie, wherein both a first and a second trailer are fixed to this adapter. This adapter is dimensioned for forces occurring in trains which are usually much greater than the forces occurring during travel on the motorway. Breakage thereof can be precluded, while wear is considerably reduced.

Such systems making use of an adapter are for instance described in the European patent publications EP-A-209312, EP-A-249816, EP-A-328852 and EP-A-241099, in addition to a non-prepublished patent application 90.201.415.8.

Now being sought after at European level is a universal adapter forming a combination of the adapters usual up to the present time.

The present invention provides a trailer for coupling to an adapter which can be fixed to a bogie, which trailer is provided with coupling means for coupling to two or more different adapters.

Such a trailer has the further advantage that the different adapters currently in use can remain commercially available, while tests in practical situations over a number of years will indicate which adapter(s) is (are) the most suitable.

Further features, details and advantages of the present invention will become apparent in the light of a description of a preferred embodiment thereof in which reference is made to the annexed drawing, in which:

Figure 1 shows a perspective, partly broken away view of a preferred embodiment of a trailer according to the present invention;

figure 2 shows a schematic view of the trailer of figure 1 in combination with a first type of adapter;

figure 3 is a schematic view in perspective of the trailer of figure 1 with a second type of adapter;

figure 4 is a schematic view in perspective of the trailer of figure 1 with a third type of adapter; and

figure 5 is a schematic view in perspective of the trailer of figure 1 with a fourth type of adapter.

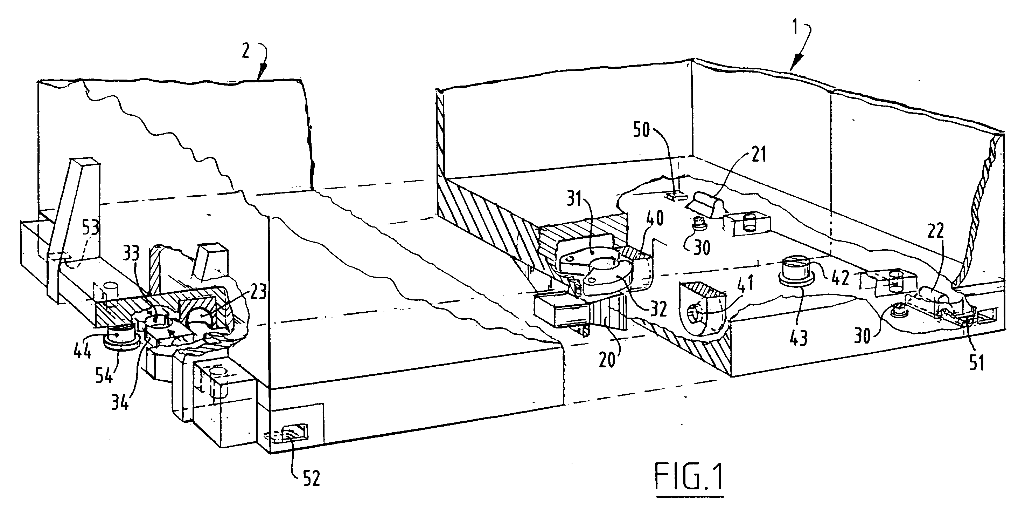

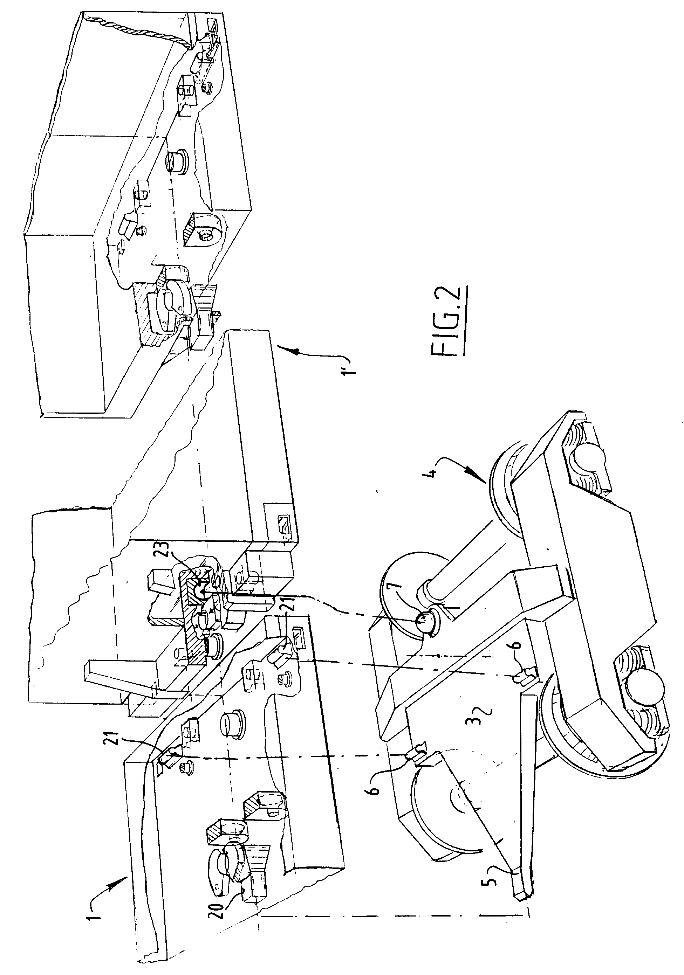

A trailer (figures 1-5) comprises in addition to a schematically depicted loading space 2 provisions for carrying the loading space up and downward from wheels for use on the road into a situation where a trailer is supported on both sides by bogies for rail transport. The different components arranged in figure 1 on the underside of the trailer 1 will be elucidated with reference to the description of figures 2-5.

An adapter 3 of the type Coda-E™ is arranged on a bogie 4 and provided with a coupling arm 5 and two supporting members 6 provided on the upper side with cylinder-shaped supporting portions extending transversely of the travel direction of the bogie 4. The adapter 3 is further provided with a sphere-shaped supporting part 7. For receiving the coupling arm 5 the trailer 1 (and 1') is provided with a horizontally oriented receiving member 20. The trailer 1 is further provided with vertically oriented receiving members 21 and 22 for receiving the two supporting members 6. A trailer 1' is provided at the rear with a receiving cavity 23 for receiving the sphere-shaped support part 7 of the adapter 3. Further details of the Coda-E™ system are described in the European patent applications EP-A-241099 and 90.201.415.8.

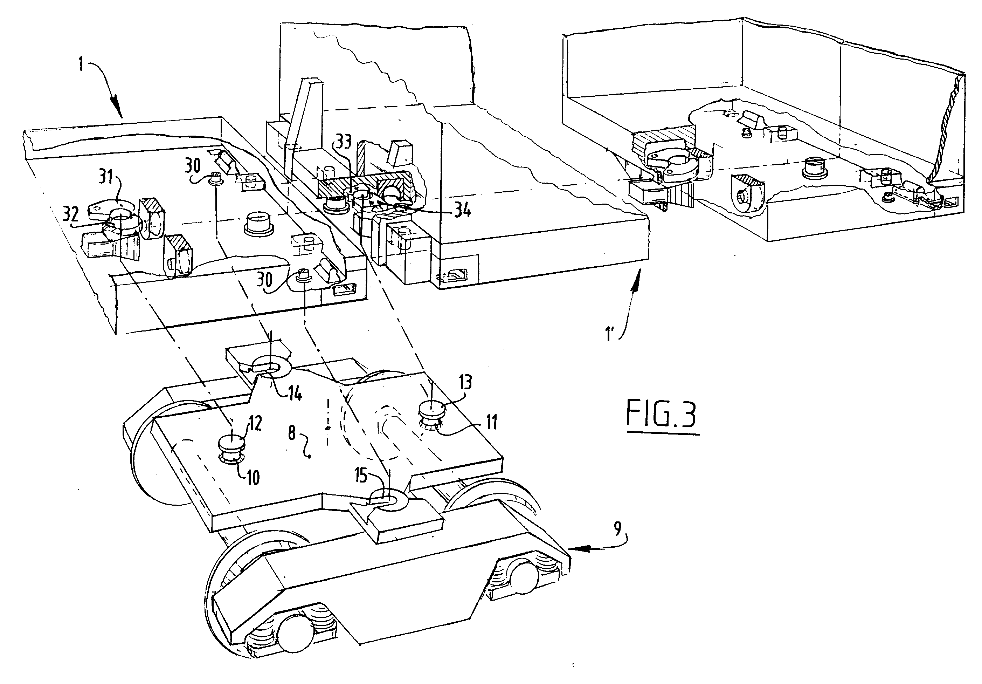

An adapter 8 (figure 3) which forms part of the Semi Rail™ system and is fixed to a bogie 9 comprises upright pins 10, 11 on the front and rear part of the adapter 8 which are provided on the top with respective flanges 12, 13. In addition the adapter 8 is provided with channels 14, 15. The trailer 1 (and 1') is provided with pins 30 provided with flanges which slide into the channels 14, 15 in addition to two parts 31, 32 movable away from and towards one another which can engage round the pin 10 under the flange 12 thereof. In order to use the trailer 1 shown for the stated Semi Rail™ system, the receiving member 20 should perhaps take a detachable form. The trailer 1' is provided at the rear with parts 33 and 34 which engage onto the pin 33 in the same manner as the parts 31 and 32 respectively.

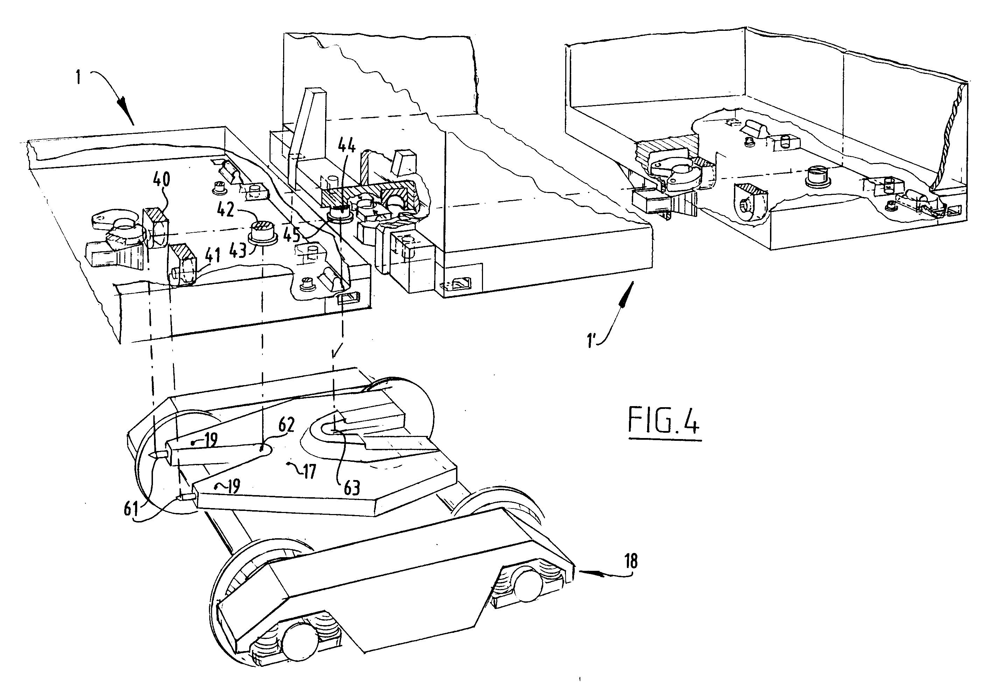

An adapter 7 (figure 4) forms part of the Kombitrailer™ system and is fixed to a bogie 18. The adapter 7 is provided on one side with two arms 19 onto which are attached two protruding pins 61, a V-shaped channel 62 situated between the arms 19 and a channel 63 located opposite the channel 62. The trailer 1 (and 1') is provided with blocks 40, 41 for receiving the pins 13 as well as a downward oriented pin 42 provided with a flange 43 which must be placed into the channel 62. The trailer 1' is provided with a pin 44 with a flange 45 for the purpose of fitting into the channel 63.

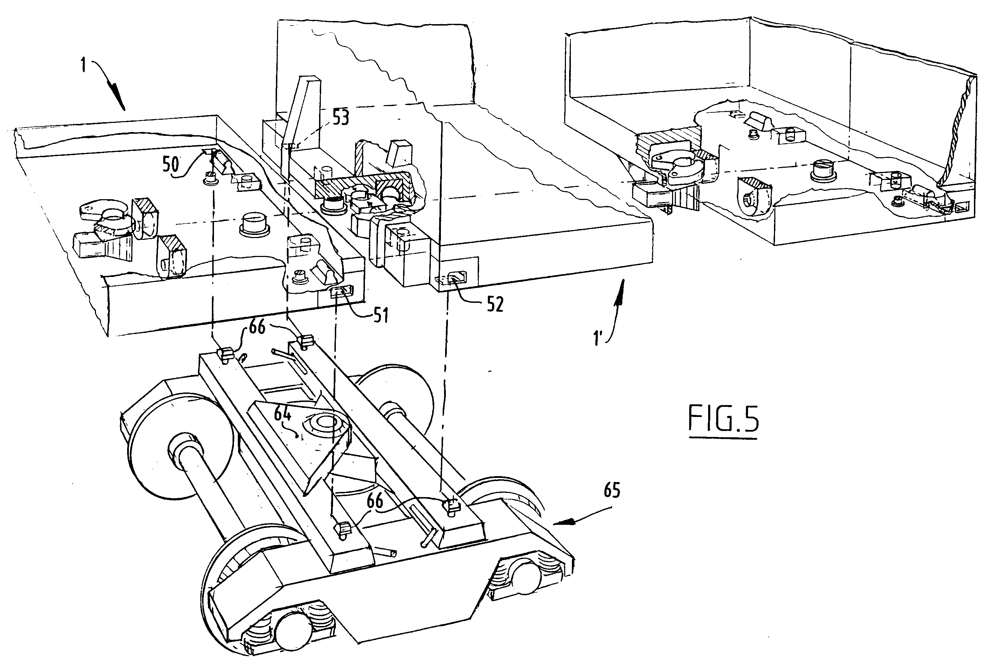

An adapter 64 (figure 5) which is suitable for the Sambre et Meuse™ system is fixed onto a bogie 65 and is provided with four symmetrically arranged rotatable locking elements 66 (twist locks). The trailer 1 (and 1') is provided with openings 50, 51 at the rear while the trailer 1' is also provided with openings 52, 53 at the front for receiving the respective rotatable locking elements 66.

## Claims

1. Trailer for coupling to an adapter which can be fixed to a bogie, which trailer is provided with coupling means for coupling to two or more different adapters.

2. Trailer as claimed in claim 1, wherein the coupling means are suitable for a Coda-E adapter.

3. Trailer as claimed in claim 2, wherein the coupling means comprise a rearward oriented receiving member (20) and two upward oriented receiving members (21, 22) on the rear side of the trailer in addition to a hollow, upward oriented receiving member (23) on the forward side.

4. Trailer as claimed in claim 1, 2 or 3, wherein the coupling means are suitable for a Kombitrailer adapter.

5. Trailer as claimed in claim 4, wherein the coupling means comprise mutually movable parts (31, 32) on the rear side of the trailer in addition to similar mutually movable parts (33, 34) on the front part.

6. Trailer as claimed in any of the claims 1-5, wherein the coupling means are suitable for a Semi Rail adapter.

7. Trailer as claimed in claim 6, wherein the coupling means comprise receiving blocks (40, 41) and a downward oriented pin (42) on the rear side of the trailer in addition to a downward oriented pin (44) on the front part.

8. Trailer as claimed in any of the claims 1-7, wherein the coupling means are suitable for an adapter of Sambre et Meuse.

9. Trailer as claimed in claim 8, wherein the trailer is provided at the front and rear sides close to the side walls with openings (50-53) in the bottom.

FIG.1

EP 0 483 924 A1

FIG.2

EP 0 483 924 A1

FIG.3

FIG.4

EP 0 483 924 A1

FIG.5

EP 0 483 924 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3 204 579 (S.BURNS)<br>* column 1, line 11 - line 34; figures 1-55 * | 1 | B60F1/00<br>B61D3/18 |
| A | US-A-4 179 997 (G.KIRWAN)<br>* the whole document * | 1 | |

TECHNICAL FIELDS
SEARCHED (Int. Cl.5 )

B60F
B61D
B61F
B61G

The present search report has been drawn up for all claims

| Place of search | Date of completion of the search | Examiner |
|---|---|---|
| THE HAGUE | 31 JANUARY 1992 | CZAJKOWSKI A.R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)